# EUROPÄISCHE PATENTSCHRIFT

(11) **EP 1 032 503 B1**
(45) Veröffentlichungstag und Bekanntmachung des Hinweises auf die Patenterteilung: **19.12.2001**
(21) Anmeldenummer: 98964408.3
(22) Anmeldetag: 19.11.1998
(51) Int. Cl.: B60J 10/00, B29D 31/00

(54) **DICHTSYSTEM MIT DICHTUNGSPROFIL UND KLEBEBAND**
SEALING SYSTEM WITH A SEALING PROFILE AND AN ADHESIVE STRIP
SYSTEME D'ETANCHEITE AVEC PROFILE D'ETANCHEITE ET BANDE ADHESIVE

(30) Priorität: 21.11.1997 DE 29720683 U
(43) Veröffentlichungstag der Anmeldung: 06.09.2000
(73) Patentinhaber: METEOR GUMMIWERKE K.H. BÄDJE GMBH & CO., 31167 Bockenem (DE)
(72) Erfinder: BUCHHOLZ, Hans-Volker, D-31137 Hildesheim (DE)
(74) Vertreter: Kosel, Peter, Dipl.-Ing.
(86) Internationale Anmeldenummer: EP9807416
(87) Internationale Veröffentlichungsnummer: WO9926801

(56) Entgegenhaltungen:
- EP-A- 0 357 973
- EP-A- 0 721 862
- EP-A- 0 764 507
- FR-A- 2 237 783
- FR-A- 2 660 239
- GB-A- 2 036 840
- PATENT ABSTRACTS OF JAPAN vol. 10, no. 51 (M-457), 28. Februar 1986 & JP 60 201938 A (KINUGAWA GOMU KOGYO KK), 12. Oktober 1985

## Beschreibung

Die Erfindung betrifft ein Dichtsystem nach dem Oberbegriff des Anspruchs 1.

Bei einem bekannten Dichtsystem dieser Art werden das Dichtungsprofil und das Klebeband gesondert hergestellt. Anschließend wird das Klebeband in einem zusätzlichen Arbeitsgang mit seiner ersten Klebeschicht an dem Dichtungsprofil befestigt. Dies ist zeit- und kostenaufwendig und schränkt in der Formgestaltung des Dichtungsprofils ein.

Der Erfindung liegt die Aufgabe zugrunde, das Dichtsystem kostengünstiger zu gestalten und größere Freiheit in der Gestaltung des Dichtsystems zu erreichen.

Diese Aufgabe ist durch die Merkmale des Anspruchs 1 gelöst. Das im Formwerkzeug an die erste Kleberschicht angespritzte Dichtungsprofil ist dauerhaft und gleichmäßig gut mit dem Klebeband verbunden. Das Klebeband kann sich in jeder Richtung auch über das Dichtungsprofil hinaus erstrecken. Dadurch lassen sich auch schwierige Einbau- und Dichtsituationen meistern. Durch die Formung des Dichtungsprofils im Formwerkzeug wird das Dichtungsprofil zu einem Formstück höchster Maßgenauigkeit und Maßhaltigkeit, wobei sich auch von vornherein dreidimensionale Formgebungen realisieren lassen, ohne daß später beim Einbau das Dichtungsprofil verformt und damit unter unerwünschte Spannungen gesetzt werden müßte.

Gemäß Anspruch 2 wird der Heißschmelzkleber in dem Formwerkzeug erwärmt und aktiviert, bevor an die so aktivierte Schicht das Dichtungsprofil angespritzt wird.

Auch gemäß Anspruch 3 ergibt sich ein fester und dauerhafter Verbund des Dichtungsprofils mit dem Klebeband.

Die Merkmale des Anspruchs 4 eignen sich besonders zur Anwendung bei Kraftfahrzeug-Dichtsystemen.

Die Trägerschicht gemäß Anspruch 5 gestattet es, dem Klebeband alle gewünschten Eigenschaften im Hinblick auf den Einsatzfall für das Dichtsystem zu geben.

Gemäß Anspruch 6 kann vorgegangen werden, wenn zum Beispiel in Bereichen des Dichtsystems jenseits des Dichtungsprofils noch gewisse elastische Abdichteigenschaften allein durch das Klebeband erreicht werden sollen.

Mit den Merkmalen des Anspruchs 7 läßt sich die Trägerschicht zum Beispiel besonders dünn bei dennoch ausreichender Festigkeit ausbilden.

Bei den Werkstoffen gemäß Anspruch 8 oder 9 ergibt sich der besondere Vorteil, daß die Verarbeitungstemperaturen im Formwerkzeug verhältnismäßig niedrig sein können. Dies schont das in das Formwerkzeug eingelegte Klebeband und führt dennoch zu der gewollten sicheren Verbindung des Dichtungsprofils mit dem Klebeband.

Gemäß Anspruch 10 ist das Dichtungsprofil als Kombinations- oder Verbundprofil aufgebaut. Darin übernimmt der Dichtungsstrang die Dichtfunktion gegenüber dem abzudichtenden Bauteil, während der Versteifungsstrang gewissermaßen als Armierung des Dichtungsstrangs für eine optimale Dichtungswirkung des Dichtungsstrangs sorgt.

Vorteilhafterweise besteht der Dichtungsstrang gemäß Anspruch 10 aus einem thermoplastischen Elastomer oder gemäß Anspruch 12 aus Weich-Polyvinylchlorid.

Die Werkstoffe für den Versteifungsstrang wählt man gemäß einem der Ansprüche 13 bis 18 je nach dem praktischen Einsatzfall. Alle diese Werkstoffe führen zu der gewollten Versteifung oder Armierung des Dichtungsstrangs und zu einer Unterstützung und Verbesserung seiner Dichtungswirkung.

Diese und weitere Merkmale und Vorteile der Erfindung werden nachfolgend anhand der in den Zeichnungen dargestellten Ausführungsbeispiele näher erläutert. Es zeigt:
Fig. 1 einen schematischen Längsschnitt durch eine erste Ausführungsform des Dichtsystems,
Fig. 2 einen schematischen Längsschnitt durch eine weitere Ausführungsform des Dichtsystems,
Fig. 3 einen schematischen Längsschnitt durch eine wiederum andere Ausführungsform des Dichtsystems und
die Fig. 4 bis 6 jeweils einen schematischen Längsschnitt durch weitere Ausführungsformen des Dichtsystems, jeweils mit einem Dichtungsprofil aus einem Dichtungsstrang und einem Versteifungsstrang.

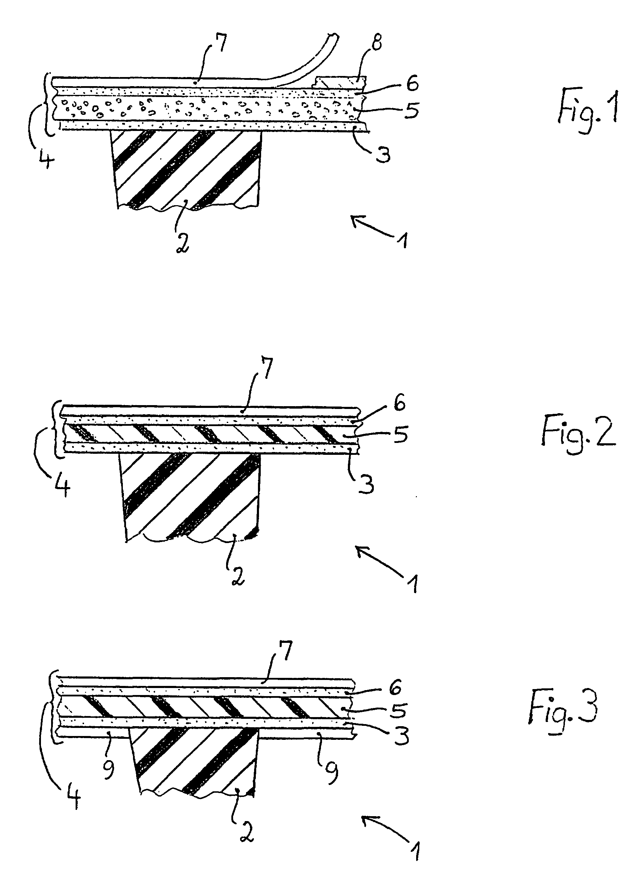

Fig. 1 zeigt ein Dichtsystem 1 mit einem Dichtungsprofil 2, das in einem nicht dargestellten Formwerkzeug an eine erste Kleberschicht 3 eines doppelseitig klebfähigen Klebebandes 4 angespritzt worden ist.

Die erste Kleberschicht 3 ist auf eine Trägerschicht 5 aufgetragen, die in diesem Fall aus einem Acrylatschaum besteht. Auf die gegenüberliegende Seite der Trägerschicht 5 ist eine zweite Kleberschicht 6 aufgetragen und durch einen abziehbaren ersten Liner 7 abgedeckt.

Zur Herstellung des Dichtsystems 1 wird das vollständige Klebeband 4 einschließlich seines Liners 7 in das Formwerkzeug eingelegt. Die aus Heißschmelzkleber bestehende erste Kleberschicht 3 wird sodann durch das Anspritzen der genügend warmen Dichtungsprofilmasse bis zu ihrer Aktivierung erwärmt. Beim anschließenden Abkühlen verfestigt sich der Heißschmelzkleber wieder und stellt die gewünschte feste Bindung zwischen der ersten Kleberschicht 3 und dem Dichtungsprofil 2 her. Das Dichtungsprofil 2 kann zum Beispiel aus einem thermoplastischen Elastomer oder auch aus Weich-Polyvinylchlorid bestehen.

Wie Fig. 1 verdeutlicht, muß das Dichtungsprofil 2 nicht an die gesamte Oberfläche der ersten Kleberschicht 3 angespritzt werden. Das Dichtungsprofil 2 kann vielmehr auch nur örtlich an die erste Kleberschicht 3 angespritzt werden. Beim Abkühlen des Dichtsystems geht dann der nur im Bereich der Anspritzung aktivierte Heißschmelzkleber der ersten Kleberschicht 3 wieder in seinen passiven, die Klebverbindung schaffenden Zustand zurück.
Zum Einbau des Dichtsystems 1 wird, wie in Fig. 1 rechts oben angedeutet, der erste Liner 7 abgezogen und das Dichtsystem 1 mit seiner zweiten Kleberschicht 6 auf ein abzudichtendes Substrat 8, zum Beispiel ein Karosserieblech, aufgeklebt.

In allen Zeichnungsfiguren sind gleiche Teile mit gleichen Bezugszahlen versehen.

In Fig. 2 ist die erste Kleberschicht 3 aus Heißschmelzkleber auf die hier als eine Trägerfolie ausgebildete Trägerschicht 5 aufgetragen. Diese Trägerfolie kann bei ausreichender Festigkeit verhältnismäßig dünn ausgebildet sein. Sie kann zum Beispiel aus Polyethylen, Polypropylen, Polyester, Polyvinylchlorid oder Polyamid oder auch aus einer aus Kombinationen dieser Stoffe laminierten Mehrschichtenfolie bestehen.

Nach oben hin schließen sich in Fig. 3 an die Trägerschicht 5 wiederum die Schichten 6 und 7 gemäß Fig. 1 an.

Auch in Fig. 3 findet eine als eine solche Trägerfolie ausgebildete Trägerschicht 5 Verwendung. In diesem Fall ist aber auf die Unterseite der Trägerschicht 5 eine ständig klebende erste Kleberschicht 3 aufgetragen und durch einen zweiten Liner 9 abgedeckt. Der zweite Liner 9 wird überall dort von der ersten Kleberschicht 3 entfernt, wo das Dichtungsprofil 2 an die erste Kleberschicht 3 angespritzt werden soll. So trägt das fertige Dichtsystem 1 gemäß Fig. 3 ggf. örtlich ein oder mehrere Dichtungsprofile 2, während im übrigen die erste Kleberschicht 3 durch Abschnitte des zweiten Liners 9 bleibend abgedeckt ist.

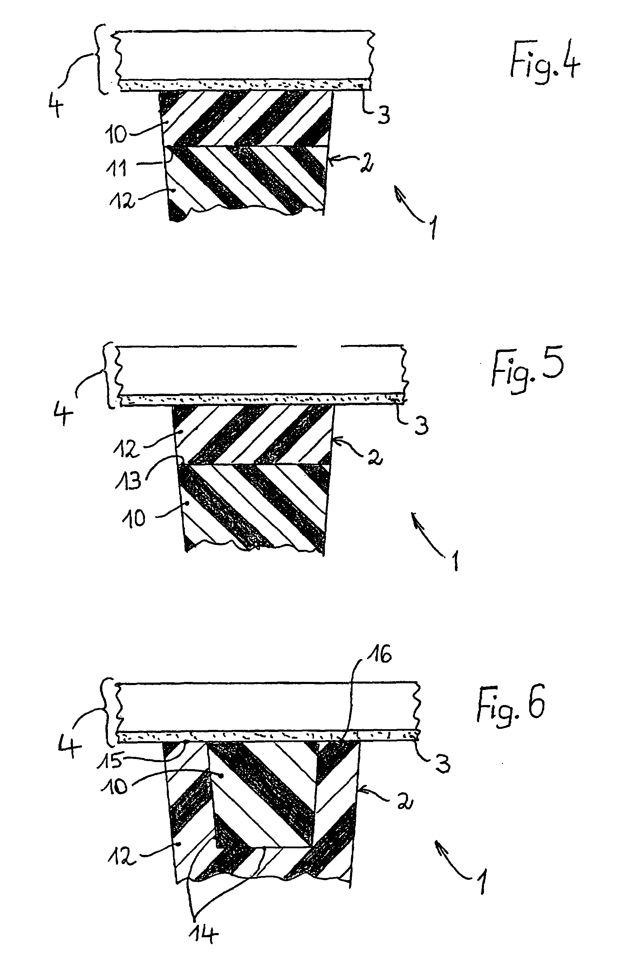

Bei den Ausführungsbeispielen nach den Fig. 4 bis 6 ist das Klebeband 4 jeweils in beliebiger, geeigneter Weise entsprechend einer der Fig. 1 bis 3 ausgebildet und in den Fig. 4 bis 6 nur schematisch angedeutet. Gezeichnet ist in den Fig. 4 bis 6 jeweils die erste Kleberschicht 3, an die jeweils das Dichtungsprofil 2 in einem auch hier nicht dargestellten Formwerkzeug angespritzt ist.

In Fig. 4 weist das Dichtungsprofil 2 einen Versteifungsstrang 10 aus einem vergleichsweise harten Kunststoff auf. Der Versteifungsstrang 10 ist in dem Formwerkzeug in einem ersten Arbeitsgang an die erste Kleberschicht 3 angespritzt. Anschließend ist an eine freie Fläche 11 des Versteifungsstrangs 10 ein Dichtungsstrang 12 aus einem vergleichsweise weichen Dichtungsmaterial angespritzt. Längs der freien Fläche 11 hat sich bei diesem letzteren Anformen eine feste und dauerhafte Verbindung zwischen dem Versteifungsstrang 10 und dem Dichtungsstrang 12 ergeben. Die Festigkeit dieser Verbindung kann bei Bedarf noch durch eine an sich bekannte Kupplungsschicht zwischen dem Versteifungsstrang 10 und dem Dichtungsstrang 12 gefördert werden.

Gemäß Fig. 5 wurde in umgekehrter Reihenfolge wie in Fig. 4 verfahren. Zunächst wurde also in dem Formwerkzeug der Dichtungsstrang 12 an die erste Kleberschicht 3 angespritzt. In einem nachfolgenden Arbeitsschritt wurde dann an eine freie Fläche 13 des Dichtungsstrangs 12 der Versteifungsstrang 10 in dem Formwerkzeug angespritzt.

Bei dem Ausführungsbeispiel nach Fig. 6 wurde analog Fig. 4 an die erste Kleberschicht 3 zunächst der Versteifungsstrang 10 angespritzt. In einem nachfolgenden Arbeitsschritt wurde in dem Formwerkzeug dann der Dichtungsstrang 12 sowohl an eine freie Fläche 14 des Versteifungsstrangs 10 als auch an Grundflächen 15 und 16 an die erste Kleberschicht 3 angespritzt. Auf diese Weise hält das Dichtungsprofil eine allseitige Elastizität jenseits der ersten Kleberschicht 3, während innerhalb des Dichtungsstrangs 12 der Versteifungsstrang 10 für die gewünschte Versteifung des gesamten Dichtungsprofils 2 sorgt.

## Patentansprüche

1. Dichtsystem (1) mit einem Dichtungsprofil (2), das an einer ersten Kleberschicht (3) eines doppelseitig klebfähigen Klebebandes (4) befestigt ist,
wobei eine auf der gegenüberliegenden Seite des Klebebandes (4) angeordnete zweite Kleberschicht (6) durch einen abziehbaren ersten Liner (7) abgedeckt und nach dem Abziehen des ersten Liners (7) an ein abzudichtendes Substrat (8) anklebbar ist,
**dadurch gekennzeichnet, daß** das Dichtungsprofil (2) in einem Formwerkzeug an die erste Kleberschicht (3) des in das Formwerkzeug eingelegten Klebebandes (4) angespritzt ist.

2. Dichtsystem nach Anspruch 1,
**dadurch gekennzeichnet, daß** die erste Kleberschicht (3) aus einem Heißschmelzkleber besteht.

3. Dichtsystem nach Anspruch 1,
**dadurch gekennzeichnet, daß** die erste Kleberschicht (3) durch einen zweiten Liner (9) abgedeckt ist,
und daß der zweite Liner (9) überall dort von der ersten Kleberschicht (3) entfernt ist, wo das Dichtungsprofil (2) an die erste Kleberschicht (3) angespritzt ist.

4. Dichtsystem nach Anspruch 3,
**dadurch gekennzeichnet, daß** die erste Kleberschicht (3) aus einem Reinacrylatkleber oder aus einem modifizierten Acrylatkleber besteht.

5. Dichtsystem nach einem der Ansprüche 1 bis 4,
**dadurch gekennzeichnet, daß** zwischen der ersten (3) und der zweiten Kleberschicht (6) eine Trägerschicht (5) angeordnet und mit den beiden Kleberschichten (3,6) verklebt ist.

6. Dichtsystem nach Anspruch 5,
**dadurch gekennzeichnet, daß** es sich bei der Trägerschicht (5) um eine geschäumte Schicht, z.B. aus Acrylaten, Polyethylen oder Polyurethan, handelt.

7. Dichtsystem nach Anspruch 5,
**dadurch gekennzeichnet, daß** es sich bei der Trägerschicht (5) um eine Trägerfolie handelt, die z.B. aus Polyethylen, Polypropylen, Polyester, Polyvinylchlorid oder Polyamid oder auch aus einer aus Kombinationen dieser Stoffe laminierten Mehrschichtenfolie besteht.

8. Dichtsystem nach einem der Ansprüche 1 bis 7,
**dadurch gekennzeichnet, daß** es sich bei dem Dichtungsprofil (2) um ein angespritztes Formstück aus einem thermoplastischen Elastomer handelt.

9. Dichtsystem nach einem der Ansprüche 1 bis 7,
**dadurch gekennzeichnet, daß** es sich bei dem Dichtungsprofil (2) um ein angespritztes Formstück aus Weich-Polyvinylchlorid handelt.

10. Dichtsystem nach einem der Ansprüche 1 bis 7,
**dadurch gekennzeichnet, daß** das Dichtungsprofil (2) einen elastischen Dichtungsstrang (12) und einen Versteifungsstrang (10) aus Kunststoff aufweist,
daß wenigstens einer dieser Stränge (10,12) an die erste Kleberschicht (3) des in das Formwerkzeug eingelegten Klebebandes (4) angespritzt ist,
und daß der eine Strang (10 oder 12) an den zuvor an die erste Kleberschicht (3) angespritzten, in dem Formwerkzeug befindlichen anderen Strang (12 oder 10) und gegebenenfalls (Fig. 6) zusätzlich an die erste Kleberschicht (3) angespritzt ist.

11. Dichtsystem nach Anspruch 10,
**dadurch gekennzeichnet, daß** der Dichtungsstrang (12) aus einem thermoplastischen Elastomer besteht.

12. Dichtsystem nach Anspruch 10,
**dadurch gekennzeichnet, daß** der Dichtungsstrang (12) aus Weich-Polyvinylchlorid besteht.

13. Dichtsystem nach einem der Ansprüche 10 bis 12,
**dadurch gekennzeichnet, daß** der Versteifungsstrang (10) aus Polyethylen besteht.

14. Dichtsystem nach einem der Ansprüche 10 bis 12,
**dadurch gekennzeichnet,.daß** der Versteifungsstrang (10) aus Polypropylen besteht.

15. Dichtsystem nach einem der Ansprüche 10 bis 12,
**dadurch gekennzeichnet, daß** der Versteifungsstrang (10) aus Polyester besteht.

16. Dichtsystem nach einem der Ansprüche 10 bis 12,
**dadurch gekennzeichnet, daß** der Versteifungsstrang (10) aus Polyvinylchlorid besteht.

17. Dichtsystem nach einem der Ansprüche 10 bis 12,
**dadurch gekennzeichnet, daß** der Versteifungsstrang (10) aus Polyamid besteht.

18. Dichtsystem nach einem der Ansprüche 10 bis 12,
**dadurch gekennzeichnet, daß** der Versteifungsstrang (10) aus Polyphenylenether oder einem modifizierten Polyphenylenether besteht.

## Claims

1. Sealing system (1) with a sealing profile (2), which sealing profile (2) is fixed onto a first adhesive layer (3) of an adhesive strip (4) which is adhesive on both sides,
wherein a second adhesive layer (6) disposed on the opposite side of the adhesive strip (4) is covered by a peelable first liner (7) and which second adhesive layer, after removal of the first liner (7), can be adhered to a substrate (8) to be sealed,
**characterised in that** the sealing profile (2) is injection molded onto the first adhesive layer (3) of the adhesive strip (4) in a molding tool, said adhesive strip (4) having been placed in the molding tool.

2. Sealing system according to claim 1,
**characterised in that** the first adhesive layer (3) consists of a hot-melt adhesive.

3. Sealing system according to claim 1,
**characterised in that** the first adhesive layer (3) is covered by a second liner (9),
and that the second liner (9) is removed from the first adhesive layer (3) wherever the sealing profile (2) is injection molded onto the first adhesive layer (3).

4. Sealing system according to claim 3,
**characterised in that** the first adhesive layer (3) consists of a pure acrylate adhesive or of a modified acrylate adhesive.

5. Sealing system according to one of the claims 1 to 4,
**characterised in that** between the first (3) and the second adhesive layer (6) is disposed a supporting layer (5), said supporting layer being adhered to the two adhesive layers (3,6).

6. Sealing system according to claim 5,
**characterised in that** the supporting layer (5) is a foamed layer, e.g. made of acrylates, polyethylene or polyurethane.

7. Sealing system according to claim 5,
**characterised in that** the supporting layer (5) is a supporting film which consists of, e.g. polyethylene, polypropylene, polyester, polyvinyl chloride or polyamide or of a laminated multi-layer film comprising a combination of these materials.

8. Sealing system according to one of the claims 1 to 7,
**characterised in that** the sealing profile (2) is an injection molded part made of a thermoplastic elastomer.

9. Sealing system according to one of the claims 1 to 7,
**characterised in that** the sealing profile (2) is an injection molded part made of soft polyvinyl chloride.

10. Sealing system according to one of the claims 1 to 7,
**characterised in that** the sealing profile (2) comprises an elastic sealing strip (12) and a stiffening strip (10) made of plastics material,
that at least one of these strips (10, 12) is injection molded onto the first adhesive layer (3) of the adhesive strip (4) which has been placed in the molding tool,
and that the one strip (10 or 12) is injection molded onto the other strip (12 or 10), which other strip (12 or 10) has been previously injection molded onto the first adhesive layer (3) and is located in the molding tool and, occasionally (Fig. 6), is additionally injection molded onto the first adhesive layer (3).

11. Sealing system according to claim 10,
**characterised in that** the sealing strip (12) consists of a thermoplastic elastomer.

12. Sealing system according to claim 10,
**characterised in that** the sealing strip (12) consists of soft polyvinyl chloride.

13. Sealing system according to one of the claims 10 to 12,
**characterised in that** the stiffening strip (10) consists of polyethylene.

14. Sealing system according to one of the claims 10 to 12,
**characterised in that** the stiffening strip (10) consists of polypropylene.

15. Sealing system according to one of the claims 10 to 12,
**characterised in that** the stiffening strip (10) consists of polyester.

16. Sealing system according to one of the claims 10 to 12,
**characterised in that** the stiffening strip (10) consists of polyvinyl chloride

17. Sealing system according to one of the claims 10 to 12,
**characterised in that** the stiffening strip (10) consists of polyamide.

18. Sealing system according to one of the claims 10 to 12,
**characterised in that** the stiffening strip (10) consists of polyphenylene ether or a modified polyphenylene ether.

## Revendications

1. Système d'étanchéité (1) comportant un profilé d'étanchéité (2), qui est fixé à une première couche de colle (3) d'une bande adhésive (4) à deux faces collantes,
une deuxième couche de colle (6) appliquée sur la face opposée de la bande adhésive (4) étant recouverte par un premier liner détachable (7) et pouvant être collée à un substrat (8) à rendre étanche après arrachement du premier liner (7),
**caractérisé en ce que** le profilé d'étanchéité (2) est projeté dans un outil de formage sur la première couche de colle (3) de la bande adhésive (4) mise en place dans l'outil de formage.

2. Système d'étanchéité selon la revendication 1,
**caractérisé en ce que** la première couche de colle (3) est constituée d'une colle fondant à la chaleur.

3. Système d'étanchéité selon la revendication 1,
**caractérisé en ce que** la première couche de colle (3) est recouverte par un deuxième liner (9),
et **en ce que** le deuxième liner (9) est enlevé de la première couche de colle (3) partout où le profilé d'étanchéité (2) est projeté sur la première couche de colle (3).

4. Système d'étanchéité selon la revendication 3,
**caractérisé en ce que** la première couche de colle (3) est constituée d'une colle d'acrylate pur ou d'une colle d'acrylate modifié.

5. Système d'étanchéité selon l'une des revendications 1 à 4,
**caractérisé en ce qu'** une couche support (5) est placée entre les première (3) et deuxième (6) couches de colle, et collée avec les deux couches de colle (3, 6).

6. Système d'étanchéité selon la revendication 5,
**caractérisé en ce que** il s'agit pour la couche support (5) d'une couche en mousse, par exemple d'acrylate, de polyéthylène ou de polyuréthane.

7. Système d'étanchéité selon la revendication 5,
**caractérisé en ce qu'**il s'agit pour la couche support (5) d'une feuille de support constituée par exemple de polyéthylène, polypropylène, polyester, chlorure de polyvinyle ou polyamide ou également par une feuille stratifiée à plusieurs couches d'une combinaison de ces substances.

8. Système d'étanchéité selon l'une des revendications 1 à 7,
**caractérisé en ce qu'**il s'agit pour le profilé d'étanchéité (2) d'une pièce de forme injectée en élastomère thermoplastique.

9. Système d'étanchéité selon l'une des revendications 1 à 7,
**caractérisé en ce qu'**il s'agit pour le profilé d'étanchéité (2) d'une pièce de forme injectée en chlorure de polyvinyle mou.

10. Système d'étanchéité selon l'une des revendications 1 à 7,
**caractérisé en ce que** le profilé d'étanchéité (2) comporte un cordon d'étanchéité élastique (12) et un cordon raidisseur (10) en matière synthétique,
**en ce qu'**au moins un de ces cordons (10, 12) est projeté sur la première couche de colle (3) de la bande adhésive (4) appliquée dans l'outil de formage,
et en ce l'un des cordons (10 ou 12) est projeté sur l'autre cordon (12 ou 10) projeté auparavant sur la première couche de colle (3) et se trouvant dans l'outil de formage, et éventuellement (figure 6) en plus sur la première couche de colle (3).

11. Système d'étanchéité selon la revendication 10,
**caractérisé en ce que** le cordon d'étanchéité (12) est constitué d'un élastomère thermoplastique.

12. Système d'étanchéité selon la revendication 10,
**caractérisé en ce que** le cordon d'étanchéité (12) est en chlorure de polyvinyle mou.

13. Système d'étanchéité selon l'une des revendications 10 à 12,
**caractérisé en ce que** le cordon raidisseur (10) est en polyéthylène.

14. Système d'étanchéité selon l'une des revendications 10 à 12,
**caractérisé en ce que** le cordon raidisseur (10) en polypropylène.

15. Système d'étanchéité selon l'une des revendications 10 à 12,
**caractérisé en ce que** le cordon raidisseur (10) est en polyester.

16. Système d'étanchéité selon l'une des revendications 10 à 12,
**caractérisé en ce que** le cordon raidisseur (10) est en chlorure de polyvinyle.

17. Système d'étanchéité selon l'une des revendications 10 à 12,
**caractérisé en ce que** le cordon raidisseur (10) est en polyamide.

18. Système d'étanchéité selon l'une des revendications 10 à 12,
**caractérisé en ce que** le cordon raidisseur (10) est en polyphénylèneéther ou en un polyphénylèneéther modifié.
